# EUROPÄISCHE PATENTSCHRIFT

(11) **EP 3 808 655 B1**
(45) Veröffentlichungstag und Bekanntmachung des Hinweises auf die Patenterteilung: **31.08.2022**
(21) Anmeldenummer: 19203609.3
(22) Anmeldetag: 16.10.2019
(51) Int. Cl.: B64D 9/00, B64D 11/06, B64C 1/20, G01M 1/12

(54) **SYSTEM ZUR NUTZLASTÜBERWACHUNG, FLUGZEUG UND VERFAHREN**
USEFUL PAYLOAD MONITORING SYSTEM, AIRCRAFT AND METHOD
SYSTÈME DE SURVEILLANCE DE LA CHARGE UTILE, AVION ET PROCÉDÉ

(43) Veröffentlichungstag der Anmeldung: 21.04.2021
(73) Patentinhaber: Aircraft Cabin Modification GmbH, 87700 Memmingen (DE)
(72) Erfinder: NOSHARI, Arash Hagh Shenas, 22605 Hamburg (DE)
(74) Vertreter: Vossius & Partner Patentanwälte Rechtsanwälte mbB

(56) Entgegenhaltungen:
- US-A- 4 446 524
- US-A1- 2017 283 086
- US-A1- 2017 315 014

## Beschreibung

Die vorliegende Erfindung betrifft ein System zur Nutzlastüberwachung bei einem Flugzeug. Weiterhin betrifft die Erfindung ein Flugzeug und ein Verfahren zum Betreiben eines Flugzeugs.

Hauptzweck von Flugzeugen ist der Transport von Nutzlast. Die Nutzlast muss dabei im Flugzeug aufgenommen und verteilt werden. Durch eine Gewichtsverteilung der Nutzlast entsteht ein erheblicher Einfluss auf den Schwerpunkt des Flugzeugs, was dessen Flugeigenschaften wesentlich verändern kann. Üblicherweise wird deshalb zumindest ein Großteil der Nutzlast, wie beispielsweise Gepäck und Fracht, gewogen und ein Beladungsplan für die Anordnung im Flugzeug erstellt. Bei einer entsprechenden Beladung kann so der Einfluss der Nutzlast auf die Flugeigenschaften optimiert werden.

Allerdings kann es zu einer von dem Beladungsplan abweichenden Beladung kommen, beispielsweise durch eine irrtümliche Verteilung von Fracht und Gepäck im Frachtraum des Flugzeugs durch eine Bodenmannschaft. Zudem können auch Teile der Nutzlast nicht bei der Beladung erfasst bzw. gewogen sein worden. Dadurch kann es zu abweichenden Einflüssen auf die Flugeigenschaften kommen, wodurch diese gegebenenfalls schlechter als erwartet sind. Beispielsweise kann bei einer ungünstigen Beladung ein Treibstoffverbrauch während des Fluges erhöht sein. Diese abweichenden Einflüsse können zum Teil erst nach dem Start des Flugzeugs erkannt werden und es kann so auch zu gefährlichen Flugsituationen kommen, wie beispielsweise einem sogenannten "Tailstrike" beim Start. Ebenso kann Nutzlast auch während des Fluges ihre Position im Flugzeug ändern, beispielsweise durch ein Verrutschen. Auch hier kann ein unerwarteter Einfluss auf die Flugeigenschaften entstehen, welcher zu verschlechterten Flugeigenschaften oder sogar einer Gefährdung führen kann.

US 4 446 524 A offenbart eine Gewichtserfassungsvorrichtung, die am Eingang zum Fracht- oder Gepäckraum und in einem Passagierflugzeug an jeder Passagiereingangstür innerhalb des Flugzeugs angeordnet ist. US 2017/315014 A1 offenbart eine Gewichtsüberwachung basierend auf Sensoren, die das Gewicht entsprechender Gepäckstücke von daran angebrachten Etiketten ablesen. US 2017/283086 A1 offenbart ein Flugbesatzungsinformationssystem, das mit Sensoren in Passagiersitzen, Sicherheitsgurten, Ablagetischen und Gepäckfächern gekoppelt ist.

Aufgabe der vorliegenden Erfindung ist es daher, einen Beitrag zur Flugsicherheit und Optimierung von Flugeigenschaften zu leisten.

Diese Aufgabe wird durch die Gegenstände der unabhängigen Patentansprüche gelöst. Vorteilhafte Ausgestaltungen mit zweckmäßigen Weiterbildungen der Erfindung sind in den jeweiligen Unteransprüchen angegeben.

### Figurenbeschreibung

- Fig.1: veranschaulicht in einer schematischen Darstellung ein System zur Nutzlastüberwachung eines Flugzeugs.
- Fig. 2: zeigt in einer schematischen Schnittansicht von oben teilweise ein Passagierkabine eines Flugzeugs mit dem System nach Fig. 1.
- Fig. 3: zeigt in einer schematischen Schnittansicht von oben teilweise einen Frachtraum des Flugzeugs nach Fig. 2.

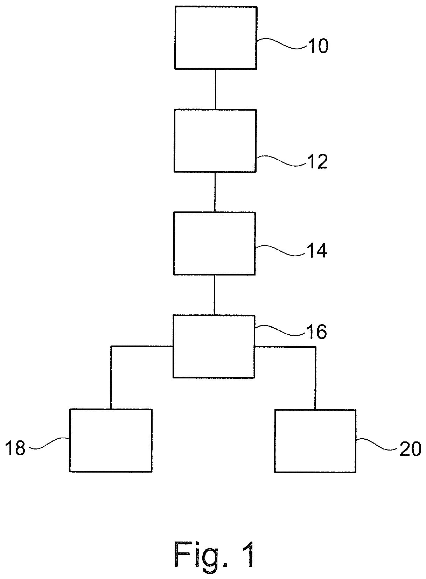

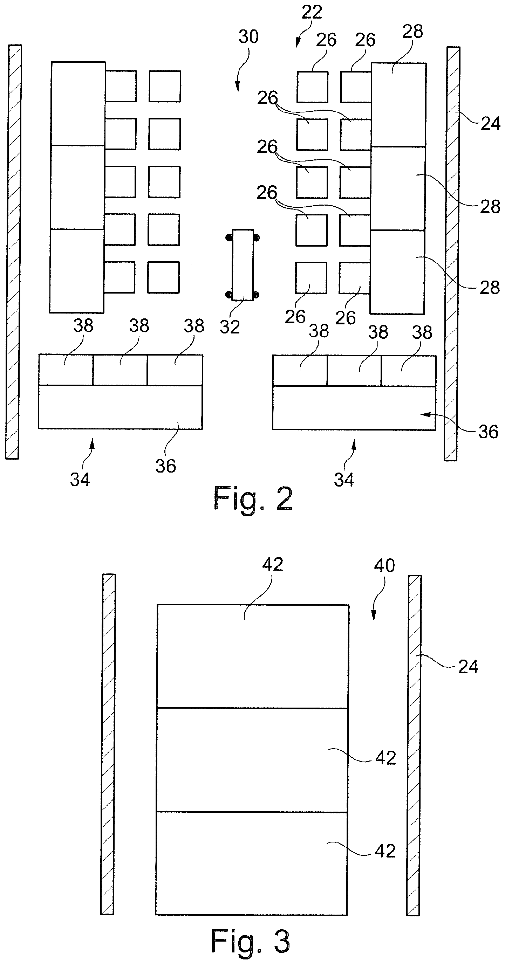

Fig. 1 veranschaulicht in einer schematischen Darstellung ein System zur Nutzlastüberwachung eines Flugzeugs. Das System weist wenigstens einen Drucksensor 10 auf, welcher vorliegend als textiler Flächensensor ausgebildet ist. Dessen Anordnung im Flugzeug wird noch näher anhand der Figuren 2 und 3 beschrieben. Der Drucksensor 10 kann beispielsweise mit einem Bordnetz des Flugzeugs verbunden sein oder auch eine autonome Stromversorgung aufweisen, wie beispielsweise eine Batterie. Alternativ kann der Drucksensor 10 auch dazu ausgebildet sein, passiv zu arbeiten und keine Stromversorgung zu benötigen. Das System kann auch eine Vielzahl von Drucksensoren 10 aufweisen, welche beispielsweise jeweils einer unterschiedlichen Ablagefläche für Nutzlast des Flugzeugs zugeordnet sind.

Der Drucksensor 10 ist dazu ausgebildet, eine Gewichtskraft und optional deren Schwerpunkt von auf einer Ablagefläche, welcher der Drucksensor 10 zugeordnet ist, ruhender Nutzlast zu erfassen. Die Gewichtskraft kann eine Kraft sein, mit welcher die Nutzlast aufgrund der Schwerkraft auf die Ablagefläche drückt. Aufgrund der Größe und der Verteilung der Nutzlast ergibt sich dabei eine Gewichtskraftverteilung, welche der Drucksensor 10 erfasst.

Beispielsweise kann der Drucksensor 10 dazu ausgebildet sein, an mehreren Stellen an der Ablagefläche eine Kraft zu messen. Diese kann aggregiert werden, um eine Gesamtkraft, welche auf die Ablagefläche wirkt, zu bestimmen. Gleichzeitig werden diese ausgewertet, um zu bestimmen, an welcher Stelle die aggregierte Gesamtkraft angreift, um jeweilige Hebelarme der Gewichtskraft der Nutzlast auf der Ablagefläche bestimmen zu können.

Jeweilige Sensorsignale des Drucksensors 10 können durch ein A/D-Wandler 12 des Systems gewandelt werden. Die Sensorsignale können dann von einem Datenübertragungsmodul 14 an eine Auswertvorrichtung 16 und/oder einen flugzeugexternen Empfänger übertragen werden. Die Datenübertragung kann beispielsweise drahtgebunden oder drahtlos sein, beispielsweise mittels Funk. Es kann eine Datenübertragung mittels WLAN vorgesehen sein, welche ein bestehendes Bord-WLAN nutzen kann, mittels Bluetooth Low Energy, wodurch der Stromverbrauch sehr gering sein kann, oder auch beispielsweise mittels RFID-Technologie. Mittels der Auswertvorrichtung 16 kann die von dem Drucksensor 10 erfasste Gewichtskraft und deren Schwerpunkt ausgewertet werden, beispielsweise um einen Einfluss der erfassten Nutzlast auf den Gesamtschwerpunkt des Flugzeugs zu bestimmen. Dadurch ist es möglich, zu überprüfen, ob die erfasste Nutzlast einer erwarteten Nutzlast und auch deren geplanter Anordnung im Flugzeug entspricht. Damit ist es möglich, eine Trimmung des Flugzeugs zu verbessern und/oder unsichere Flugzustände zu vermeiden.

Die jeweiligen Sensorsignale und die Ergebnisse der Auswertung durch die Auswertvorrichtung 16 können beispielsweise an eine Datenbankvorrichtung 18 übertragen werden, um von dieser gespeichert zu werden. Damit können diese Daten für eine spätere Auswertung zur Verfügung stehen. Alternativ oder zusätzlich können die jeweiligen Sensorsignale und Ergebnisse der Auswertung an eine Ausgabevorrichtung 20 übertragen werden, welche beispielsweise die Nutzlastverteilung im Cockpit des Flugzeugs anzeigt. Dadurch stehen diese Daten der Besatzung des Flugzeugs zur Verfügung, wodurch diese entsprechend auf eine ungünstige Nutzlastverteilung und/oder eine Überschreitung einer Maximalzuladung reagieren kann.

Die Ausgabevorrichtung 20 bzw. Anzeige kann das eigentliche Interface zum Piloten und jeweiligen Flugbegleitern sein. Es kann die Beladung zum Beispiel durch eine "Rot - Gelb - Grün" Ampel für die Flugbegleitung dargestellt werden. Die exakten Flächen, jeweilige Nutzlastgewichte sowie das Gesamtgewicht und der resultierende Schwerpunkt können für den Piloten und/oder den Ramp Agent bereitgestellt werden. Zusätzlich kann ein Beladungsplan angezeigt werden, um einen Vergleich zu einer gewünschten Beladung zu haben. Bei entsprechend hohen Abweichungen über vorgegebenen Schwellwerten werden Ablageflächen gelb oder rot dargestellt. Auch diese Bewertung kann durch die Auswertvorrichtung 16 erfolgen.

Fig. 2 zeigt in einer Oberansicht geschnitten teilweise eine Passagierkabine 22 eines Passagierflugzeugs. Diese Passagierkabine 22 ist durch einen Rumpf 24 begrenzt. In der Passagierkabine 22 sind mehrere Sitzreihen mit jeweiligen Flugzeugsitzen 26 angeordnet. Über jeweiligen Sitzreihen sind Handgepäckablagen 28 angeordnet. Zwischen den Sitzreihen verläuft ein Gang 30, auf welchem ein Trolley 32 steht. Zudem ist in der Passagierkabine 22 eine Bordküche 34 angeordnet, welche zwei Arbeitsflächen 36 und mehrere Staufächer 38 aufweist, in welchen beispielsweise jeweilige Atlas-Container mit Verpflegung für die Passagiere verstaut werden können. Unterhalb der Arbeitsflächen 36 ist beispielsweise auch ein Stauraum für den Trolley 32 vorgesehen.

Fig. 3 zeigt in einer Oberansicht geschnitten teilweise einen Frachtraum 40 des Flugzeugs. Auch der Frachtraum 40 ist durch den Rumpf 24 begrenzt. Der Frachtraum 40 weist eine Bodenfläche auf, welche vorliegend in drei Bodenflächenbereiche 42 für das Abstellen jeweils eines zugeordneten Frachtcontainers unterteilt ist. Alternativ oder zusätzlich kann der Frachtraum 40 beispielsweise auch zur Aufnahme von losen Gepäckstücken oder anderen Gegenständen ausgebildet sein.

Die oben genannten Flächen können mittels des Systems zur Nutzlastüberwachung überwacht werden. Entsprechend können jeweils zugeordnete Drucksensoren 10 vorgesehen sein, welche jeweils eine Gewichtskraft und deren Schwerpunkt von auf den oben genannten Ablageflächen ruhender Nutzlast erfassen. Beispielsweise kann also die Gewichtskraft und deren Wirkort von jeweiligen Passagieren auf den Sitzen 26 und dem Gang 30 erfasst werden. Ebenso kann eine Ablagefläche der Handgepäckablagen 28 jeweils ein textiler Flächensensor als Drucksensor 10 aufweisen. Damit kann das Gewicht und der Ort jeweiliger Gepäckstücke in den Handgepäckablagefächern 28 erfasst werden. Dabei kann auch festgestellt werden, ob ein Handgepäckstück ein zulässiges Höchstgewicht überschreitet und die Besatzung entsprechend darauf aufmerksam gemacht werden. Dadurch kann eine Gefährdung durch herabfallendes Handgepäck minimiert werden.

Auch in der Bordküche 34 kann die Nutzlast überwacht werden. Dafür kann beispielsweise jeweils ein Drucksensor 10 auf den Arbeitsflächen 36 vorgesehen sein. Damit kann beispielsweise auch erfasst werden, ob dort noch lose Gegenstände lagern und die Besatzung im Falle von Turbulenzen und/oder vor einer Landung und einem Start darauf aufmerksam gemacht werden. Damit kann diese Nutzlast gesichert werden. Ebenso kann die Nutzlast in den Staufächern 38 durch entsprechende Drucksensoren 10 erfasst werden. Dadurch kann automatisch kontrolliert werden, ob die Bordverpflegung geladen wurde. Nach Abschluss des Fluges kann ebenso ein Verbrauch erfasst werden und entsprechend automatische Nachbestellungen getätigt werden. Durch einen Drucksensor 10 an der Bodenfläche für den Trolley 32 kann ähnliches auch bei der Befüllung des Trolleys 32 erfasst werden. Darüber hinaus kann auch hier gewarnt werden, falls ein Trolley 32 nicht ordnungsgemäß verstaut wurde. Auch bei dem Trolley 32, welcher ebenfalls Teil des Systems zur Nutzlastüberwachung sein kann, können jeweilige Drucksensoren 10 vorgesehen sein. Dadurch kann beispielsweise, insbesondere bei entsprechend hoher Auflösung der Druckverteilung, erfasst werden, welche jeweiligen Verbrauchsgüter bei dem Trolley 32 zu welchem Ausmaß verbraucht wurden. Beispielsweise kann so erfasst werden, dass eine Limonade verbraucht wurde und nachgefüllt werden muss, während Wasser noch ausreichend vorhanden ist.

Darüber hinaus kann das System 10 durch die Erfassung der Gewichtskräfte und deren Schwerpunkte von den jeweiligen Nutzlasten einen Einfluss auf den Gesamtschwerpunkt des Flugzeugs bestimmen. Dies kann zum einen durch eine entsprechende Trimmung berücksichtigt werden oder auch dazu benutzt werden, um eine Nutzlast vor einem Start oder nach einem Bewegen wieder wie gewünscht zu platzieren. Außerdem ist so eine Überwachung einer korrekten Beladung möglich. Beispielsweise kann eine falsche Beladung mit schwerer Fracht im Frachtraum 40 andernfalls beim Starten zu einem Tailstrike des Flugzeugs führen. Mit dem System zur Nutzlastüberwachung kann also eine unsachgemäße Beladung noch vor dem Beginn des Fluges erkannt werden. Allerdings kann auch während des Fluges ein ungewolltes Verschieben von Nutzlast, beispielsweise aufgrund von Turbulenzen, erkannt werden. Gegebenenfalls kann die Nutzlast gesichert und/oder an die richtige Stelle verschoben werden. Außerdem kann eine ungewollte Verschiebung dem Piloten angezeigt werden, welche diesem bei der Fehlersuche bei einem ungewöhnlichen Flugverhalten des Flugzeugs helfen kann. Beispielsweise kann der Pilot so besser erkennen, ob sich eine Nutzlast verschoben hat oder eine der Steuerflächen des Flugzeugs beschädigt ist.

Der aus der Nutzlastverteilung im Flugzeug resultierende Schwerpunkt ist wichtig für Flugeigenschaften und Sicherheit. Beispielsweise kann eine ungünstige Gewichtsverteilung der Nutzlast eine starke Trimmung des Flugzeugs erfordern, wodurch dessen Treibstoffverbrauch während des Fluges erhöht sein kann. Durch eine umfangreiche Erfassung möglichst vieler Ablageflächen mittels jeweiliger Drucksensoren 10 kann dieser Einfluss sehr genau erfasst werden. Alternativ können aber auch nur die wichtigsten Ablageflächen mit den schwersten zu erwartenden Lasten mittels jeweiliger Drucksensoren 10 überwacht werden. Beispielsweise kann lediglich der Frachtraum 40 entsprechend überwacht werden. Dadurch kann das System besonders leicht und kostengünstig sein.

Die sichere Reise mit dem Flugzeug ist die wichtigste Anforderung in der Luftfahrt. Aufgrund der immer höheren Anforderung an die Produktivität und somit immer geringeren Bodenzeit für Flugzeuge muss die Beladung sicher und zuverlässig erfolgen können. Deshalb wird vor jedem Flug üblicherweise genau ermittelt, in welche Sektionen welche Fracht verladen werden soll. Ob das jedoch richtig umgesetzt wird, kann von der Bodenmannschaft in der Regel gar nicht oder nicht schnell genug geprüft werden. Die Piloten berechnen anhand der vorher definierten Beladung in den Ladezonen die Balance vom Flieger. Entsprechend wird die Trimmung eingestellt und das Einhalten von Grenzwerten geprüft. Dabei muss sich die Besatzung bzw. der Pilot jedoch darauf verlassen, dass das Flugzeug auch wie geplant beladen wurde. Durch das hier beschriebene System kann stattdessen eine tatsächliche Kontrolle erfolgen und die Sicherheit und Effizienz im Luftverkehr erhöht werden.

Beim Start oder auch bei starken Turbulenzen kann es durch die Kräfte zu einem Verrutschen der Ladung kommen. Auch dies kann durch das hier beschriebene System erfasst werden, um entsprechend zielgerichtete Gegenmaßnahmen zu ermöglichen.

Das hier beschriebene intelligente Überwachungssystem der Ladungskontrolle ist in der Lage, den Schwerpunkt des jeweils überwachten Raums bzw. der jeweils überwachten Ablagefläche für Nutzlast in den Flächenkoordinaten des Flugzeugs zu ermitteln und diese beispielsweise an das Cockpit und/oder ein Tablet weiter zu leiten.

Ebenso kann das intelligente Ladungsüberwachungssystem den Inhalt von Behältern in der Bordküche, Containern, Trolleys, und/oder Küchenbehältern überwachen und Wartungszeiten reduzieren, da eine Catering Crew im Vorfeld über die aufgebrauchten Güter via Fernübertragung und/oder Tablet in Kenntnis gesetzt werden kann. Dadurch kann die Beladung mit Verbrauchsgütern optimiert und jeweilige Cateringkosten reduziert werden.

Das System kann auch zur sogenannten Pantry Code Überwachung eingesetzt werden. Jede Catering Beladung bzw. Zusammensetzung von Verbrauchsgütern hat einen Pantry Code. Dieser Code erlaubt beispielsweise Rückschlüsse auf Gewicht und Art der jeweiligen Beladung. So kann beispielsweise auf ein Wiegen der Catering-Beladung verzichtet werden. Stattdessen kann beispielsweise einmal eine Beladung für einen bestimmten Flug festgelegt werden und der Flieger immer mit dieser Catering Beladung beladen werden. Dabei ist ein Nominalgewicht dieser Beladung bekannt, beispielsweise 1,5 Tonnen. Ob jetzt jede Catering Beladung richtig beladen und/oder bereitgestellt wurde, kann dann durch das System abschließend im Flieger geprüft werden. Dabei kann das System einen zusätzlichen Sensor aufweisen, um den Pantry Code von jeweiligen Nutzlasten zu erfassen, beispielsweise mittels eines Barcodelesegeräts. Dadurch kann auch diesbezüglich kontrolliert bzw. überwacht werden. Zudem kann so auch berücksichtigt werden, dass beispielsweise die Catering Beladung richtig zusammengesetzt ist, aber an der falschen Stelle im Flugzeug abgestellt wurde. Auch zu einer solchen Prüfung kann die Auswertvorrichtung 16 ausgebildet sein.

Ebenso kann das System Veränderungen im jeweiligen Schwerpunkt des überwachten Raumes während des Fluges an das Cockpit melden. Mit dieser Information können die Piloten bei Bedarf gezielt in die Trimmung des Flugzeugs eingreifen und drohenden Schaden abwenden. Bedingt durch den hohen Anspruch des sicheren Reisens durch Fluggesellschaften sowie der hohen Anschaffungskosten von Flugzeugen besteht der Wunsch einer Minimierung der Ground Time (Standzeit, Turn-Around Zeit, etc.) der Flugzeuge. Das System hat also Vorteile für Fluggesellschaften und Versicherungen.

Das System ist ein Ladungskontroll- und Informationssystem, dass die Gewichtsverteilung in Echtzeit aufzeigen und aufzeichnen kann. Die Nutzlast in einzelnen Bereichen des Flugzeugs wird gewogen. Dies gibt Aufschluss über den jeweiligen Druck pro Fläche sowie den resultierenden Schwerpunkt auf der Fläche der jeweils gemessenen Ablagefläche. Die Daten werden an das Cockpit gesendet und/oder gespeichert, um sowohl der Fluggesellschaft zur Auswertung zur Verfügung zu stellen als auch weiter verarbeitbar und abrufbar zu haben. Beispielsweise können diese Daten auch jeweiligen Flughafenbetreibern zur Verfügung gestellt werden, insbesondere verkauft werden, um die Arbeit jeweiliger Bodenmannschaften, wie einer Ladecrew, zu verbessern.

Der jeweilige Ladungszustand der Gepäckräume kann mit einem Signal an den Piloten mitgeteilt werden. Der Pilot kann im Bedarfsfall frühzeitig Maßnahmen einleiten, wie eine Umverteilung von Nutzlast vor dem Start. Die gewonnenen Erkenntnisse können detailliert auf einem Computer, Tablet, Smartphone oder einer Smartwatch nach deren Übertragung dargestellt werden, um eine genauere Auswertung vorzunehmen. Außerdem können sie per Fernübertragung übermittelt werden.

Jeweilige Drucksensoren 10 können als Oberfläche bzw. Belag einer Ablagefläche dienen, wodurch Kosten und Platzbedarf minimiert sein können. Beispielsweise kann ein Teppichboden des Gangs 30 durch einen textilen Flächensensor gebildet werden, womit der Drucksensor 10 im Bodenbelag integriert ist. Mit Hilfe der gewonnen Sensordaten lassen sich die Informationen gewinnen, ob das Gepäck wie vorgesehen verstaut ist oder ob es eine Ladungsverschiebung gibt und/oder gab.

Mit dem System kann auch erfasst werden, wie viele Getränke und/oder Gerichte von welcher Sorte nach Abschluss des Service vorhanden sind, um automatisiert die nachzufüllende Menge beim Caterer anzufordern.

Mittels des Systems zur Nutzlastüberwachung kann Folgendes erreicht und/oder automatisiert werden:
- Ermittlung des Gepäckraumflächenschwerpunkts zur Optimierung des Treibstoffverbrauchs
- Vermeidung eines Tailstrikes
- Ermittlung von verrutschtem Gepäck und Meldung an den Piloten, insbesondere sofortige Meldung
- Genaue Ermittlung der Lagerkapazitäten, sowie automatisierte Nachbestellung
- Analyse des Konsumverhaltens der Passagiere
- Materialermüdung in Abhängigkeit von der Belastung über Lebenszeit
- Optimierung der Trimmung

Der Drucksensor 10 generiert beispielsweise ein eindeutiges Signals (z.B. in Form eines elektrischen Widerstandes), das Rückschlüsse auf die Ladungsposition sowie das Gewicht und den resultierenden Schwerpunkt ermöglicht. Daraus lässt sich die Information ableiten, wie das Gepäck verstaut wurde und ob es über den gesamten Flug seinen Ort beibehalten hat. Eine entsprechende Auswertung kann durch die Auswertvorrichtung 16 erfolgen. Ebenso lässt sich die Information ableiten, ob die Trolleys und/oder Stauräume in der Bordküche richtig und/oder in ausreichendem Maße bestückt sind.

### BEZUGSZEICHENLISTE

- 10: Drucksensor
- 12: A/D-Wandler
- 14: Übertragungsvorrichtung
- 16: Auswertvorrichtung
- 18: Datenbankvorrichtung
- 20: Ausgabevorrichtung
- 22: Passagierkabine
- 24: Rumpf
- 26: Flugzeugsitz
- 28: Handgepäckablage
- 30: Gang
- 32: Trolley
- 34: Boardküche
- 36: Arbeitsfläche
- 38: Stauraum
- 40: Frachtraum
- 42: Bodenflächen

## Patentansprüche

1. Flugzeug mit einem Frachtraum (40), der eine Bodenfläche aufweist, und mit einem System zur Nutzlastüberwachung des Flugzeugs, wobei das System wenigstens eine Ablagefläche (42) für eine Nutzlast, die die Bodenfläche des Frachtraums aufweist, und wenigstens einen Drucksensor (10), der als Flächensensor ausgebildet ist, aufweist, wobei der wenigstens eine Drucksensor (10) dazu ausgebildet ist, eine Gewichtskraft und/oder deren Schwerpunkt von auf der Ablagefläche (42) ruhender Nutzlast zu erfassen, und wobei das System die tatsächliche Nutzlastverteilung des Flugzeugs kontinuierlich erfasst.

2. Flugzeug nach Anspruch 1, wobei das System mehrere Drucksensoren (10) aufweist, um jeweils die Gewichtskraft und/oder deren Schwerpunkt von auf mehreren Ablageflächen (26, 28, 30, 32, 36, 38, 42) ruhenden Nutzlasten zu erfassen, wobei einer Ablagefläche (26, 28, 30, 32, 36, 38, 42) jeweils ein oder mehrere Sensoren zugeordnet sind.

3. Flugzeug nach Anspruch 1 oder 2, wobei das System eine Auswertvorrichtung (16) aufweist, welche dazu ausgebildet ist, anhand jeweiliger erfasster Gewichtskräfte und/oder Schwerpunkte einen Einfluss der erfassten Nutzlast auf den Gesamtschwerpunkt des Flugzeugs zu bestimmen.

4. Flugzeug nach Anspruch 3, wobei die Auswertvorrichtung (16) ferner dazu ausgebildet ist, in Abhängigkeit des bestimmten Einflusses der erfassten Nutzlast auf den Gesamtschwerpunkt des Flugzeugs eine dazu korrespondierende Trimmung des Flugzeugs zu bestimmen,
wobei das System optional eine Steuervorrichtung aufweist, welche die bestimmte Trimmung einstellt, insbesondere durch Einstellen eines Anstellwinkels des Höhenleitwerks, Einstellen jeweiliger Höhenruder und/oder Einstellen jeweiliger Trimmruder.

5. Flugzeug nach einem der vorhergehenden Ansprüche, wobei das System eine Auswertvorrichtung (16) aufweist, welche dazu ausgebildet ist, jeweilige erfasste Gewichtskräfte und/oder Schwerpunkte mit jeweiligen vorbestimmten Gewichtskräften und/oder Schwerpunkten zu vergleichen und bei Überschreiten einer Höchstabweichung ein Warnsignal auszugeben,
insbesondere wobei die Auswertvorrichtung (16) dazu ausgebildet ist, den bestimmte Einfluss der erfassten Nutzlast auf den Gesamtschwerpunkt des Flugzeugs mit einem vorbestimmten Einfluss der Nutzlast auf den Gesamtschwerpunkt des Flugzeugs zu vergleichen und bei Überschreiten eines Höchsteinflusses das Warnsignal auszugeben.

6. Flugzeug nach Anspruch 5, wobei die Auswertvorrichtung (16) dazu ausgelegt ist, die jeweiligen vorbestimmten Gewichtskräfte und/oder Schwerpunkte und/oder den vorbestimmten Einfluss auf den Gesamtschwerpunkt des Flugzeugs in Abhängigkeit von einem Beladungsplan des Flugzeugs zu bestimmen
und/oder
zu bestimmen, ob die jeweiligen vorbestimmten Gewichtskräfte und/oder Schwerpunkte und/oder der vorbestimmte Einfluss auf den Gesamtschwerpunkt des Flugzeugs jeweiligen vorgegebenen Maximalwerten entsprechen
und/oder
zu bestimmen, ob die jeweiligen vorbestimmten Gewichtskräfte und/oder Schwerpunkte und/oder der vorbestimmte Einfluss auf den Gesamtschwerpunkt des Flugzeugs jeweiligen vorher durch die Auswertvorrichtung bestimmten Werten entsprechen, insbesondere zu einem spezifischen Zeitpunkt wie unmittelbar nach fertiger Beladung des Flugzeugs, vor dem Start oder bei Erreichen der Reiseflughöhe.

7. Flugzeug nach einem der vorhergehenden Ansprüche, wobei das System eine Auswertvorrichtung (16) aufweist, welche dazu ausgebildet ist, in Abhängigkeit von einer Flugzeuglage aus den jeweiligen erfassten Gewichtskräften und/oder deren jeweiligen erfassten Schwerpunkten jeweilige tatsächliche Gewichtskräfte und/oder deren jeweilige tatsächliche Schwerpunkte zu erfassen.

8. Flugzeug nach einem der vorhergehenden Ansprüche, wobei das System wenigstens einen in oder auf einer eine jeweilige Ablagefläche (26, 28, 30, 32, 36, 38, 42) seitlich begrenzende Seitenfläche angeordneten Drucksensor aufweist, wobei der wenigstens eine seitlich angeordnete Sensor dazu ausgebildet ist, die Gewichtskraft und/oder deren Schwerpunkt von auf der Seitenfläche abgestützter Nutzlast zu erfassen.

9. Flugzeug nach einem der vorhergehenden Ansprüche, wobei wenigstens einer der jeweiligen Drucksensoren (10) als textiler Flächensensor ausgebildet ist.

10. Flugzeug nach einem der vorhergehenden Ansprüche, wobei das System wenigstens eine Datenbankvorrichtung (18) zum Speichern jeweiliger erfasster Werte und/oder jeweiliger Auswertungen aufweist, insbesondere als zeitlicher Verlauf,
und/oder
wobei das System wenigstens eine Übertragungsvorrichtung (14) zum Speichern jeweiliger erfasster Werte und/oder jeweiliger Auswertungen aufweist, insbesondere mittels Funk.

11. Flugzeug nach einem der vorhergehenden Ansprüche, wobei das Fugzeug ein ziviles Passagierflugzeug ist.

12. Verfahren zum Betreiben eines Flugzeugs nach einem der vorhergehenden Ansprüche, wobei wenigstens eine Gewichtskraft und/oder deren Schwerpunkt von auf einer Bodenfläche des Frachtraums des Flugzeugs angeordneter Nutzlast erfasst wird,
ferner optional aufweisend wenigstens einen der folgenden Schritte:
- Ausgabe jeweiliger erfasster Werte;
- Anzeige jeweiliger erfasster Gewichtskräfte und deren Schwerpunkte;
- Ausgabe einer Warnung in Abhängigkeit von jeweiligen erfassten Gewichtskräften und deren Schwerpunkten;
- Einstellen einer Trimmung des Flugzeugs in Abhängigkeit von jeweiligen erfassten Gewichtskräften und deren Schwerpunkten;
- Startfreigabe oder Startverbot in Abhängigkeit von jeweiligen erfassten Gewichtskräften und deren Schwerpunkten;
- Neuanordnung jeweiliger Nutzlast in dem Flugzeug in Abhängigkeit von jeweiligen erfassten Gewichtskräften und deren Schwerpunkten;
- Verbrauchsgütermanagment in Abhängigkeit von jeweiliger erfasster Gewichtskräfte und deren Schwerpunkte;
- Speichern und/oder Übertragen jeweiliger erfasster Werte und/oder jeweiliger Auswertungen.

## Claims

1. An aircraft with a cargo hold (40), said cargo hold (40) comprising a floor area, and with a system for monitoring the payload of the aircraft, wherein the system comprises at least one storage area (42) for a payload comprising the floor area of the cargo hold, and at least one pressure sensor (10) configured as a surface sensor, wherein the at least one pressure sensor (10) is configured to detect a weight and/or its center of gravity of payload resting on the storage area (42), and wherein the system continuously determines the actual payload distribution of the aircraft.

2. The aircraft according to claim 1, wherein the system comprises a plurality of pressure sensors (10) to detect the weight and/or its center of gravity of payload resting on a plurality of storage areas (26, 28, 30, 32, 36, 38, 42), wherein one or more sensors are assigned to one storage area (26, 28, 30, 32, 36, 38, 42).

3. The aircraft according to claim 1 or 2, wherein the system comprises an evaluation device (16) which is configured to determine an influence of the detected payload on the overall center of gravity of the aircraft on the basis of respective detected weights and/or centers of gravity.

4. The aircraft according to claim 3, wherein the evaluation device (16) is further configured to determine trim of the aircraft depending on the determined influence of the detected payload on the overall center of gravity of the aircraft,
wherein the system optionally comprises a control device that adjusts the determined trim, in particular by adjusting an angle of attack of the horizontal stabilizer, adjusting respective elevators and/or adjusting respective trimming tabs.

5. The aircraft according to any one of the preceding claims, wherein the system comprises an evaluation device (16) which is configured to compare respective detected weights and/or centers of gravity with respective predetermined weights and/or centers of gravity and to output a warning signal when a maximum deviation is exceeded,
in particular wherein the evaluation device (16) is configured to compare the determined influence of the detected payload on the overall center of gravity of the aircraft with a predetermined influence of the payload on the overall center of gravity of the aircraft and to output the warning signal when a maximum influence is exceeded.

6. The aircraft according to claim 5, wherein the evaluation device (16) is configured to determine the respective predetermined weights and/or centers of gravity and/or the predetermined influence on the overall center of gravity of the aircraft depending on a loading plan of the aircraft,
and/or
to check whether the respective predetermined weights and/or centers of gravity and/or the predetermined influence on the overall center of gravity of the aircraft corresponds to respective predetermined maximum values,
and/or
to check whether the respective predetermined weights and/or centers of gravity and/or the predetermined influence on the overall center of gravity of the aircraft corresponds to respective values determined beforehand by the evaluation device, in particular at a specific point in time such as immediately after finished loading of the aircraft, prior to takeoff or upon reaching the cruising altitude.

7. The aircraft according to any one of the preceding claims, wherein the system comprises an evaluation device (16) which is configured to detect respective actual weights and/or their respective actual centers of gravity on the basis of the respective detected weights and/or their respective detected centers of gravity depending on an aircraft attitude.

8. The aircraft according to any one of the preceding claims, wherein the system comprises at least one pressure sensor arranged in or on a side surface laterally bounding a respective storage area (26, 28, 30, 32, 36, 38, 42), wherein the at least one laterally arranged sensor is configured to detect the weight and/or its center of gravity of payload supported on the side surface.

9. The aircraft according to any one of the preceding claims, wherein at least one of the respective pressure sensors (10) is configured as a textile surface sensor.

10. The aircraft according to any one of the preceding claims, wherein the system comprises at least one database device (18) for storing respective detected values and/or respective evaluations, in particular as a time history,
and/or
wherein the system comprises at least one transmission device (14) for storing respective detected values and/or respective evaluations, in particular by means of radio.

11. The aircraft according to any one of the preceding claims, wherein the aircraft is a civil passenger aircraft.

12. A method for operating an aircraft according to any one of the preceding claims,
wherein at least one weight and/or its center of gravity of payload arranged on a floor area of the cargo hold of the aircraft is detected,
further optionally comprising at least one of the following steps:
- output of respective detected values;
- display of respective detected weights and their centers of gravity;
- output of a warning depending on respective detected weights and/or their centers of gravity;
- adjustment of trim of the aircraft depending on respective detected weights and their centers of gravity;
- take-off clearance or take-off prohibition depending on respective detected weights and their centers of gravity;
- rearrangement of respective payload in the aircraft depending on respective detected weights and their centers of gravity;
- consumables management depending on respective detected weights and their centers of gravity;
- storage and/or transmission of respective detected values and/or respective evaluations.

## Revendications

1. Avion avec une soute (40), qui présente une surface de fond, et avec un système de surveillance de charge utile de l'avion, dans lequel le système présente au moins une surface de réception (42) pour une charge utile, qui présente la surface de fond de la soute, et présente au moins un capteur de pression (10), qui est réalisé sous la forme d'un capteur surfacique, dans lequel le au moins un capteur de pression (10) est réalisé pour détecter un poids et/ou le centre de gravité de celui-ci d'une charge utile reposant sur la surface de réception (42), et dans lequel le système détecte en continu la répartition de charge utile effective de l'avion.

2. Avion selon la revendication 1, dans lequel le système présente plusieurs capteurs de pression (10), afin de détecter respectivement le poids et/ou le centre de gravité de celui-ci de charges utiles reposant sur plusieurs surfaces de réception (26, 28, 30, 32, 36, 38, 42), dans lequel respectivement un ou plusieurs capteurs sont associés à une surface de réception (26, 28, 30, 32, 36, 38, 42).

3. Avion selon la revendication 1 ou 2, dans lequel le système présente un dispositif d'évaluation (16), lequel est réalisé pour déterminer sur la base des poids et/ou centres de gravité détectés respectifs une influence de la charge utile détectée sur le centre de gravité total de l'avion.

4. Avion selon la revendication 3, dans lequel le dispositif d'évaluation (16) est réalisé en outre pour déterminer en fonction de l'influence déterminée de la charge utile détectée sur le centre de gravité total de l'avion une compensation correspondant à cela de l'avion,
dans lequel le système présente éventuellement un dispositif de commande, lequel règle la compensation déterminée, en particulier par réglage d'un angle d'attaque de l'empennage horizontal stabilisateur, réglage de gouvernes de profondeur respectives et/ou réglage de volets compensateurs réglables respectifs.

5. Avion selon l'une quelconque des revendications précédentes, dans lequel le système présente un dispositif d'évaluation (16), lequel est réalisé pour comparer les poids et/ou centres de gravité détectés respectifs aux poids et/ou centres de gravité prédéfinis respectifs et pour émettre un signal d'avertissement lorsqu'un écart maximal est dépassé,
en particulier dans lequel le dispositif d'évaluation (16) est réalisé pour comparer l'influence déterminée de la charge utile détectée sur le centre de gravité total de l'avion à une influence prédéfinie de la charge utile sur le centre de gravité total de l'avion et pour émettre le signal d'avertissement lorsqu'une influence maximale est dépassée.

6. Avion selon la revendication 5, dans lequel le dispositif d'évaluation (16) est conçu pour déterminer les poids et/ou centres de gravité prédéfinis respectifs et/ou l'influence prédéfinie sur le centre de gravité total de l'avion en fonction d'un plan de chargement de l'avion
et/ou
pour déterminer si les poids et/ou centres de gravité prédéfinis respectifs et/ou l'influence prédéfinie sur le centre de gravité total de l'avion correspondent à des valeurs maximales prédéfinies respectives
et/ou
pour déterminer si les poids et/ou centres de gravité prédéfinis respectifs et/ou l'influence prédéfinie sur le centre de gravité total de l'avion correspondent à des valeurs respectives préalablement déterminées par le dispositif d'évaluation, en particulier à un moment spécifique tel que directement après le chargement achevé de l'avion, avant le décollage ou lorsque l'altitude de croisière est atteinte.

7. Avion selon l'une quelconque des revendications précédentes, dans lequel le système présente un dispositif d'évaluation (16), lequel est réalisé pour détecter en fonction d'une attitude d'avion à partir des poids détectés respectifs et/ou des centres de gravité détectés respectifs de ceux-ci les poids effectifs respectifs et/ou centres de gravité effectifs respectifs de ceux-ci.

8. Avion selon l'une quelconque des revendications précédentes, dans lequel le système présente au moins un capteur de pression disposé dans ou sur une surface latérale délimitant latéralement une surface de réception (26, 28, 30, 32, 36, 38, 42) respective, dans lequel le au moins un capteur disposé latéralement est réalisé pour détecter le poids et/ou le centre de gravité de celui-ci de la charge utile en appui sur la surface latérale.

9. Avion selon l'une quelconque des revendications précédentes, dans lequel au moins un des capteurs de pression (10) respectifs est réalisé sous la forme d'un capteur surfacique textile.

10. Avion selon l'une quelconque des revendications précédentes, dans lequel le système présente au moins un dispositif de base de données (18) pour la mise en mémoire de valeurs détectées respectives et/ou évaluations respectives, en particulier en tant que variation dans le temps,
et/ou
dans lequel le système présente au moins un dispositif de transmission (14) pour la mise en mémoire de valeurs détectées respectives et/ou évaluations respectives, en particulier par radio.

11. Avion selon l'une quelconque des revendications précédentes, dans lequel l'avion est un avion de ligne civil.

12. Procédé pour faire fonctionner un avion selon l'une quelconque des revendications précédentes, dans lequel au moins un poids et/ou centre de gravité de celui-ci d'une charge utile disposée sur une surface de fond de la soute de l'avion est détecté,
présentant en outre éventuellement au moins une des étapes suivantes :
- l'émission de valeurs détectées respectives ;
- l'affichage des poids détectés respectifs et centres de gravité de ceux-ci ;
- l'émission d'un avertissement en fonction des poids détectés respectifs et centres de gravité de ceux-ci ;
- le réglage d'une compensation de l'avion en fonction des poids détectés respectifs et centres de gravité de ceux-ci ;
- l'autorisation de décollage ou l'interdiction de décollage en fonction des poids détectés respectifs et centres de gravité de ceux-ci ;
- la redisposition de la charge utile respective dans l'avion en fonction des poids détectés respectifs et centres de gravité de ceux-ci ;
- la gestion de biens de consommation en fonction des poids détectés respectifs et centres de gravité de ceux-ci ;
- la mise en mémoire et/ou transmission des valeurs détectées respectives et/ou évaluations respectives.
